# FASCICULE DE BREVET EUROPEEN

(11) **EP 0 866 582 B1**
(45) Date de publication et mention de la délivrance du brevet: **27.04.2005**
(21) Numéro de dépôt: 98400457.2
(22) Date de dépôt: 26.02.1998
(51) Int. Cl.: H04L 12/24, G06F 11/20

(54) **Procédé d'élection de la station active dans un système sécurisé de traitement de l'information**
Wahlverfahren von der aktiven Station in einem gesicherten System für Informationsverarbeitung
Method for the election of the active station in a secure information processing system

(30) Priorité: 27.02.1997 FR 9702350
(43) Date de publication de la demande: 23.09.1998
(73) Titulaire: ALCATEL, 75008 Paris (FR)
(72) Inventeur: Conseil, Florence, 92290 Chatenay Malabry (FR)
(74) Mandataire: Sciaux, Edmond

(56) Documents cités:
- EP-A- 0 723 223
- FR-A- 2 721 465
- US-A- 4 596 012
- US-A- 5 251 299

## Description

L'invention concerne un procédé de sécurisation d'une station de traitement de l'information et s'applique à tout système de traitement de l'information nécessitant un haut niveau de sécurisation du fonctionnement, par exemple, aux réseaux de télécommunication, dont l'opérabilité doit être assurée de façon permanente.

De façon connue, la sécurisation d'un tel système implique notamment la duplication de la station de traitement de l'information. Ainsi, le système dispose d'une station dite active sur laquelle s'exécute les différents logiciels du système ainsi que d'une station dite de secours. En cas de défaillance de la station active, le système doit être à même de basculer sur la station de secours qui devient alors station active.

La plupart des systèmes sécurisés de ce type partagent une même mémoire de masse. Cependant, il arrive que cette configuration s'avère impossible dans la mesure où les deux stations sont distantes et qu'elles ne peuvent de ce fait partager physiquement les mêmes périphériques. Auquel cas, il est nécessaire de mettre en oeuvre une duplication totale des deux stations, y compris de la mémoire de masse, de sorte que chaque station n'a accès qu'à sa propre mémoire de masse.

Dans un tel cas, pour que le basculement de la station active vers la station de secours s'opère de façon transparente vis à vis des applications logicielles, il est indispensable d'avoir un mécanisme de synchronisation des données contenues sur chacune des deux mémoires de masse.

Cependant, en cas de défaillance d'une des deux stations, le mécanisme de synchronisation devient impossible à mettre en oeuvre.

Des solutions à ce premier problème ont été exposées par exemple dans la demande de brevet française FR-A-2721465 ou dans le brevet américain US-A-4596012.

Mais ces deux solutions sont insuffisantes dans le cas où la seconde station commet à son tour une défaillance. Dans une telle situation, il est nécessaire, au redémarrage, d'élire comme station active la station ayant les données les plus récentes dans la mémoire de masse afin de ne pas perdre de l'information, c'est-à-dire la station qui a commis une défaillance en dernier.

Le but principal de la présente invention est de proposer un procédé d'élection de la station active résolvant ce problème.

Un second but est d'accélérer le redémarrage de la station dans un fonctionnement dégradé où la seconde station est en panne grave et incapable de redémarrer.

Pour cela, le procédé selon l'invention consiste à utiliser, selon un protocole bien défini, un identificateur (ou jeton), contenu dans une mémoire persistante, qui peut prendre soit l'état absent soit l'état présent.

Pour cela, le procédé selon l'invention se caractérise en ce que chaque station comporte, dans une mémoire persistante qui lui est associée, un identificateur ou jeton pouvant prendre soit l'état présent lorsque ladite station possède dans sa mémoire de masse des données plus récentes que l'autre, soit l'état absent dans le cas contraire (c'est-à-dire lorsque la station n'a pas des données plus récentes que l'autre),
en ce que le jeton passe de l'état absent à l'état présent lorsque l'autre station devient non opérationnelle,
en ce que, inversement, le jeton passe de l'état présent à l'état absent lorsque l'autre station devient opérationnelle,
et en ce qu'une station devenant opérationnelle est élue comme active si le jeton est à l'état présent dans la mémoire persistante associée à cette station.

Selon une mise en oeuvre particulière, un troisième but de l'invention consiste à gérer les montages et démontages de partitions des mémoires de masse pendant le fonctionnement du système, tout en assurant l'élection de la station ayant les données les plus récentes, en cas de défaillance d'une ou des deux stations.

Pour cela le procédé selon cette mise en oeuvre se caractérise en ce que le jeton passe de l'état absent à l'état présent sur une station lorsqu'une partition sécurisée de l'autre station est démontée, et en ce que le jeton passe de l'état présent à l'état absent lorsque cette partition sécurisée est remontée et synchronisée.

Les différents caractéristiques et avantages de l'invention apparaîtront de façon plus claire dans la description qui va suivre en référence aux figures annexées.
La figure 1 indique un schéma général du système.
La figure 2 illustre, de façon schématique, l'algorithme d'élection de la station active.

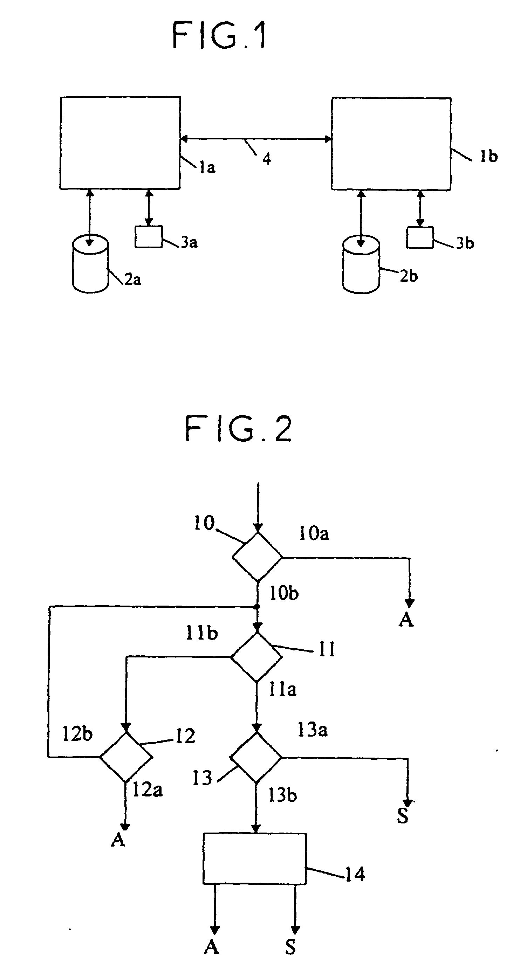

Sur la figure 1, les références 1a et 1b représentent les deux stations. Elles sont reliées entre elle par une liaison 4 classique, par exemple de type Ethernet, qui permet la synchronisation des données contenues sur chacune des mémoires de masse 2a et 2b. Les mémoires de masse sont reliées aux stations par des moyens connus en soi, par exemple par des interfaces SCSI (*Small Computer Standard Interface*) ou PCMCIA (*Personal Computer Memory Card International Association*).

Chaque station 1a et 1b est en outre reliée à un moyen de mémorisation persistante, respectivement 3a et 3b. Différentes mises en oeuvre de cette mémoire sont possibles. Elle peut être implantée directement sur la mémoire de masse de la station ou bien, de façon indépendante, sur une mémoire de type NVRAM (*Non Volatile Random Access Memory*)*.*

Chacune des deux mémoires 3a et 3b contient un identificateur de la station ayant les données les plus récentes. Cet identificateur (ou jeton) est susceptible de prendre deux états que l'on appellera « présent » ou « absent » dans la suite. Le jeton est présent dans la mémoire persistante (3a ou 3b) uniquement si la station (1a ou 1b respectivement) possède des données dans sa mémoire de masse (respectivement 2a ou 2b) plus récentes que l'autre station.

De cette règle, on peut tirer deux conséquences immédiates :
- Il est impossible que le jeton soit présent sur les deux stations en même temps.
- Dans le cas du fonctionnement normal (ou nominal), aucune des stations n'ayant des données plus récentes que l'autre dans sa mémoire de masse, le jeton n'est présent sur aucune des deux stations.

Afin de respecter ces principes généraux et de résoudre les problèmes posés, la condition d'acquisition consiste à ne faire passe le jeton de l'état absent à l'état présent sur une station que dans le cas où l'autre station devient non opérationnelle.

Inversement, le jeton passe de l'état présent à l'état absent sur une station donnée dans le cas où l'autre station redevient opérationnelle.

Par « redevenir opérationnelle », on entend implicitement que non seulement la station elle-même devient, de nouveau, fonctionnelle mais qu'en plus sa mémoire de masse s'est resynchronisée par rapport à l'autre mémoire de masse de sorte que les données soient les mêmes pour chacune des deux stations. Par ailleurs, on entend par « défaillant » l'état d'une station qui n'est pas en état de marche, soit à la suite d'une défaillance matérielle, soit à la suite d'une défaillance logicielle.

La figure 2 indique de façon schématique l'algorithme d'élection qui se déroule lors de chaque démarrage d'une station.

Tout d'abord, la station effectue un premier test 10 sur la présence du jeton. Si le jeton est présent (10a), alors la station peut immédiatement démarrer en tant qu'active (A). Il est à noter que du fait que la station possède le jeton à l'état présent, c'est que l'autre station n'est pas opérationnelle.

Dans le cas contraire (10b), on effectue alors un second test 11 sur l'état de la seconde station. Si cette seconde station n'est pas défaillante (11a) alors un autre test 13 est exécuté pour savoir si cette seconde station a démarré en tant qu'active ou non. Dans le cas affirmatif (13a). la station démarre en tant que secours (S). Dans le cas négatif (13b), une procédure d'arbitrage 14 doit être mise en place afin de déterminer si laquelle des deux stations doit être activée. Ce cas arrive notamment à la suite par exemple d'un dysfonctionnement général du système. Dans pareil cas, les deux stations devenant non opérationnelle en même temps puis redémarrant presque simultanément, aucune ne possède le jeton et il faut recourir à un moyen d'arbitrage supplémentaire pour élire la station active.

Différentes procédures d'arbitrage peuvent être mise en oeuvre et l'invention ne saurait être comprise comme se limitant à une procédure particulière. On peut toutefois citer à titre d'exemple d'arbitrer selon les adresses « fond de panier », c'est-à-dire les adresses de la carte des deux stations dans l'armoire de connexion.

Dans le cas où la réponse du test 11 sur le démarrage de la seconde station est négative (11b). on met en place un test 12 de temporisation. Tant qu'un certain délai n'est pas écoulé (12b), on effectue périodiquement le test 11 sur le redémarrage de la seconde station. Si à un moment donné, elle redémarre (11a). algorithme se poursuit comme il est indiqué ci-dessus. Si. au contraire, la seconde station n'a pas démarré au bout du temps imparti (12a) alors la station démarre comme active (A).

La temporisation doit être strictement supérieure au temps de démarrage d'une station. Pour plus de sécurité, on peut majorer ce délais et choisir par exemple une temporisation de l'ordre de deux fois le temps de démarrage moyen d'une station.

Le procédé qui vient d'être décrit résout le problème technique posé, à savoir l'élection de la station ayant les données les plus récentes dans sa mémoire de masse.

De façon additionnelle, ce procédé permet d'accélérer le redémarrage de la station qui a les données les plus récentes. Dans ce cas. qui correspond à la référence 10a sur la figure 2, la station ayant le jeton redémarre aussitôt sans attendre un éventuel redémarrage de l'autre station.

Le temps de démarrage d'une station dépend de la configuration tant matérielle que logicielle de la station mais l'ordre de grandeur de ce temps peut être estimé grossièrement à quelques minutes. Aussi, on comprend bien l'intérêt d'un tel procédé qui permet d'économiser ces minutes de non-fonctionnement du système dans le cas d'applications sensibles.

Selon une mise en oeuvre particulière du procédé selon l'invention, il est possible de tenir compte des opérations de maintenance susceptibles de survenir sur le système.

En particulier, la mémoire de masse (2a et 2b) de chacune des stations (respectivement 1a et 1b) est généralement constituée d'un disque dur divisé en un certain nombre de partition. Typiquement. les partitions sont de deux types : les partitions sécurisées et les partitions non sécurisées.

Les partitions sécurisées font l'objet d'une duplication sur chacune des deux stations et sont préférentiellement dévolues aux données.

Les partitions non sécurisées, quant à elles, ne font pas l'objet d'une duplication et sont préférentiellement dévolues aux codes objets qui, n'étant pas modifiés au cours du temps, n'ont pas besoin d'être sécurisés.

Une opération de maintenance d'une station peut consister à démonter une partition d'une des deux mémoires de masse, notamment une partition sécurisée, afin par exemple de faire une sauvegarde des données. Pendant la durée durant laquelle la partition est démontée, le mécanisme de synchronisation est impossible à mettre en oeuvre.

Aussi, selon une mise en oeuvre du procédé selon l'invention, le jeton passe de l'état absent à l'état présent, sur une station, lorsqu'une partition sécurisée de l'autre station est démontée et, inversement, le jeton passe de l'état présent à l'état absent lorsque la partition sécurisée est remontée et resynchronisée.

## Revendications

1. Procédé d'élection d'une station active parmi deux stations (1a et 1b) possédant chacune une mémoire de masse (2a et 2b respectivement), chaque station comportant, dans une mémoire persistante (respectivement 3a et 3b) qui lui est associée, un identificateur ou jeton pouvant prendre soit l'état présent lorsque ladite station possède dans sa mémoire de masse des données plus récentes que l'autre, soit l'état absent dans le cas contraire, **caractérisé**
**en ce que** ledit jeton passe de l'état absent à l'état présent lorsque ladite autre station devient non opérationnelle,
**en ce que**, inversement, ledit jeton passe de l'état présent à l'état absent lorsque ladite autre station devient opérationnelle,
et **en ce qu'**une station devenant opérationnelle est élue comme active si ledit jeton est à l'état présent dans la mémoire persistante associée à ladite station.

2. Procédé d'élection selon la revendication 1 **caractérisé en ce que** ladite mémoire persistante est une mémoire de type NVRAM.

3. Procédé d'élection d'une station active parmi deux stations conforme à l'une quelconque des revendications précédentes, **caractérisé en ce que** ledit jeton passe de l'état absent à l'état présent lorsqu'une partition sécurisée de ladite autre station est démontée et **en ce que** ledit jeton passe de l'état présent à l'état absent lorsque ladite partition sécurisée est remontée et synchronisée.

4. Procédé d'élection d'une station active parmi deux stations conforme à l'une des revendications précédentes, **caractérisé en ce que**, même si ledit jeton est à l'état absent, ladite station devenant opérationnelle est élue comme active si, au bout d'un délai déterminé à l'avance, l'autre station demeure non opérationnelle.

5. Procédé d'élection d'une station active parmi deux stations selon la revendication précédente, **caractérisé en ce que** ledit délai est égal à deux fois le temps de démarrage moyen d'une station.

6. Procédé d'élection d'une station active parmi deux stations conforme à l'une quelconque des revendications précédentes, **caractérisé en ce que**, dans le cas où aucune des deux stations n'a un jeton à l'état présent au moment du redémarrage, un mécanisme d'arbitrage non ambigu est mis en place.

7. Procédé d'élection d'une station active parmi deux stations conforme à la revendication 6 **caractérisé en ce que** le mécanisme d'arbitrage consiste à élire comme active la station ayant l'adresse fond de panier soit la plus basse, soit la plus haute.

## Patentansprüche

1. Verfahren zur Auswahl einer aktiven Station aus zwei Stationen (1a und 1b), von denen jede über einen Massenspeicher (2a beziehungsweise und 2b) verfügt, wobei jede Station in einem ihr zugeordneten nichtflüchtigen Speicher (3a beziehungsweise und 3b) über einen Identifier oder Kennzeichner verfügt, welcher entweder den anwesenden Zustand annehmen kann, wenn die besagte Station in ihrem Massenspeicher über aktuellere Daten als die andere Station verfügt, oder bei Vorliegen des gegenteiligen Falles den abwesenden Zustand annehmen kann, **dadurch gekennzeichnet,**
**daß** der besagte Identifier vom abwesenden in den anwesenden Zustand wechselt, wenn die besagte andere Station außer Betrieb geht,
dadurch, daß der besagte Identifier umgekehrt vom anwesenden in den abwesenden Zustand wechselt, wenn die besagte andere Station in Betrieb geht,
sowie dadurch, daß eine Station, die in Betrieb geht, als aktive Station ausgewählt wird, wenn sich der besagte Identifier im nichtflüchtigen Speicher, der dieser Station zugeordnet ist, im anwesenden Zustand befindet.

2. Auswahlverfahren gemäß Anspruch 1, **dadurch gekennzeichnet, daß** der besagte nichtflüchtige Speicher ein Speicher vom NVRAM-Typ ist.

3. Verfahren zur Auswahl einer aktiven Station aus zwei Stationen gemäß einem oder beiden der vorgenannten Ansprüche, **dadurch gekennzeichnet, daß** der besagte Identifier vom abwesenden in den anwesenden Zustand wechselt, wenn eine gesicherte Partition der besagten anderen Station aufgehoben wird, sowie dadurch, daß der besagte Identifier vom anwesenden in den abwesenden Zustand wechselt, wenn die besagte gesicherte Partition wieder eingerichtet und resynchronisiert ist.

4. Verfahren zur Auswahl einer aktiven Station aus zwei Stationen gemäß einem der vorgenannten Ansprüche, **dadurch gekennzeichnet, daß** die besagte in Betrieb gehende Station selbst dann, wenn sich der Identifier im abwesenden Zustand befindet, als aktive Station ausgewählt wird, falls die andere Station nach Ablauf einer zuvor festgelegten Zeitspanne außer Betrieb bleibt.

5. Verfahren zur Auswahl einer aktiven Station aus zwei Stationen gemäß dem vorgenannten Anspruch, **dadurch gekennzeichnet, daß** die besagte Zeitspanne gleich der zweifachen mittleren Startzeit einer Station ist.

6. Verfahren zur Auswahl einer aktiven Station aus zwei Stationen gemäß einem oder mehreren der vorgenannten Ansprüche, **dadurch gekennzeichnet, daß** für den Fall, daß keine der beiden Stationen zum Startzeitpunkt über einen im anwesenden Zustand befindlichen Identifier verfügt, ein eindeutiger Entscheidungsmechanismus angewandt wird.

7. Verfahren zur Auswahl einer aktiven Station aus zwei Stationen gemäß Anspruch 6, **dadurch gekennzeichnet, daß** der Entscheidungsmechanismus darin besteht, als aktive Station diejenige Station auszuwählen, deren Backplane-Adresse entweder die niedrigste oder die höchste Adresse ist.

## Claims

1. A method of electing an active station from two stations (1a and 1b) having respective mass memories (2a and 2b), each station including, in a respective persistent memory (3a or 3b) associated with it, an identifier or token that can take up either the "present" state when said station possesses data in its mass memory that is more recent than the data in the other station, or the "absent" state in the opposite case, said method being **characterized in that**:
said token goes from the "absent" state to the "present" state whenever the other station becomes non-operational;
conversely, said token goes from the "present" state to the "absent" state whenever said other station becomes operational; and
a station becoming operational is elected as the active station if said token is in the "present" state in the persistent memory associated with said station.

2. A method according to claim 1, **characterized in that** said persistent memory is a memory of the NVRAM type.

3. A method of electing an active station from two stations according to either preceding claim, **characterized in that** said token goes from the "absent" state to the "present" state whenever a replicated partition of said other station is removed, and **in that** said token goes from the "present" state to the "absent" state once said replicated partition is re-installed and synchronized.

4. A method of electing an active station from two stations according to any preceding claim, **characterized in that**, even if said token is in the "absent" state, said station becoming operational is elected to be the active station if, by the end of a predetermined delay, the other station remains non-operational.

5. A method of electing an active station from two stations according to the preceding claim, **characterized in that** said delay is equal to twice the mean start-up time of a station.

6. A method of electing an active station from two stations according to any preceding claim, **characterized in that**, if neither of the two stations has a token in the "present" state on re-starting, an unambiguous arbitration mechanism is set up.

7. A method of electing an active station from two stations according to claim 6, **characterized in that** the arbitration mechanism consists in electing as the active station that station which has the backplane address that is either lower, or higher.
